# EUROPÄISCHE PATENTSCHRIFT

(11) **EP 2 052 428 B1**
(45) Veröffentlichungstag und Bekanntmachung des Hinweises auf die Patenterteilung: **23.12.2009**
(21) Anmeldenummer: 07801241.6
(22) Anmeldetag: 16.08.2007
(51) Int. Cl.: H01M 2/38

(54) **FLÜSSIGELEKTROLYTBATTERIE MIT MEHRKANAL-DURCHMISCHUNG**
LIQUID ELECTROLYTE BATTERY HAVING A MULTI-CHANNEL MIXING FEATURE
BATTERIE À ÉLECTROLYTE LIQUIDE, À MÉLANGE PAR CANAUX MULTIPLES

(30) Priorität: 16.08.2006 DE 102006038051
(43) Veröffentlichungstag der Anmeldung: 29.04.2009
(73) Patentinhaber: IQ Power Licensing AG, 6300 Zug (CH)
(72) Erfinder: BAUER, C., Günther, 85521 Ottobrunn (DE)
(74) Vertreter: Müller & Schubert
(86) Internationale Anmeldenummer: PCT/DE2007/001450
(87) Internationale Veröffentlichungsnummer: WO 2008/019673

(56) Entgegenhaltungen:
- DE-A1- 19 823 916
- US-A- 4 963 444
- US-A- 5 032 476
- US-A- 5 096 787

## Beschreibung

Die Erfindung betrifft eine Flüssigelektrolytbatterie, wie z. B. eine Blei-Säure-Batterie, die z. B. als Starterbatterie in Fahrzeugen eingesetzt wird.

Das Bestreben der Fahrzeugindustrie nach Leichtbauweise betrifft auch die Einsparung von Batteriegewicht. Gleichzeitig steigt jedoch die Anforderung nach hoherer Batterieleistung, da neben der herkömmlichen Energie zum Starten z. B eines PKW auch Energie für zusätzliche Aggregate wie elektrische Fensterheber, Stellmotore zum Verstellen der Sitze oder auch zum elektrischen Beheizen der Sitze benötigt wird. Ferner ist es wünschenswert, die Batterieleistung über die Lebensdauer der Batterie möglichst auf einem konstanten hohen Niveau zu halten, da zunehmend auch sicherheitsrelevante Funktionseinheiten wie Lenkung und Bremsen elektrisch gesteuert und betatigt werden. Unter Batterieleistung wird nachfolgend die Kapazität der Batterie sowie die Fähigkeit der Batterie zur Stromabgabe bzw. zur Stromaufnahme verstanden. Die Batterieleistung wird von verschiedenen, dem Fachmann bekannten Faktoren beeinflußt.

Aus dem Stand der Technik sind verschiedene Maßnahmen bekannt, um die Leistung einer Flüssigelektrolytbatterie, wie z. B. einer Blei-Säure-Batterie zu erhöhen. Ein besonderes Problem bei diesen Batterien ist, daß die Batterieleistung eine starke Abhängigkeit von der Batterietemperatur aufweist. In einem zulässigen Betriebsbereich ist mit einem Kapazitätsrückgang von ca. 0,6 bis 0,8 % pro Grad Celsius oder mehr zu rechnen. Wird angenommen, daß die optimale Betriebstemperatur bei ca. 30 Grad Celsius liegt und die Batterie einer Temperatur von minus 20 Grad Celsius ausgesetzt ist, würde deren Kapazität nur noch ca. 60 % der konzipierten Kapazität betragen und somit z.B. das Betätigen des Anlassers eines Fahrzeugs Schwierigkeiten bereiten.

Es ist jedoch dem Fachmann auch bekannt, daß weitere Einflußfaktoren die Kapazität der Batterie verringern. Ein wesentlicher Einflußfaktor ist die sogenannte Stratifikation der Säure, d. h. die Säurekonzentration ist bezüglich der Elektrodenfläche nicht gleichmäßig. Das bewirkt, daß die Elektrodenplatten an Stellen, an denen die Säurekonzentration zu hoch ist, korrodieren und somit die Lebensdauer der Batterie sich vermindert, aber an Stellen, an denen die Säurekonzentration zu gering ist, die Batterie nicht ihre volle Leistung erreicht.

Daher sind unterschiedliche Vorrichtungen und Verfahren entwickelt worden, um den Elektrolyten umzuwälzen, damit die Säurekonzentration in allen Volumenabschnitten der Batterie gleich groß ist. Bei stationären Batterien wird z. B. Luft in den Elektrolyten eingeblasen. Für Fahrzeugbatterien sind Elektrolytdurchmischungsvorrichtungen bekannt, die als hydrostatische Pumpen bezeichnet werden. Es handelt sich dabei um strömungstechnische Hindernisse, die die Flüssigkeit in eine vorbestimmte Richtung drängen. Diese Vorrichtungen sind nur bei sich bewegenden Fahrzeugen wirksam, da sie Brems- und Beschleunigungsvorgänge in Verbindung mit der Massenträgheitskraft des flüssigen Elektrolyten nutzen, wobei es immer eine Vorzugsrichtung gibt, in der ein größeres Strömungsvolumen erzeugt wird als quer zu dieser Vorzugsrichtung.

Diese Technik ist dem Fachmann bekannt, so daß lediglich beispielhaft auf die Dokumente US 4,963,444; US 5;096,787 und US 5,032,476 und DE 297 18 004.5 verwiesen wird.

Wenn die Batterie beheizt wird, entsteht neben der beabsichtigten Elektrolyterwärmung auch eine vertikale Konvektionsströmung, die ebenfalls zur Elektrolytdurchmischung beiträgt. Dabei ist von Bedeutung, daß die Elektrolytströmungen, die durch die Brems- und Beschleunigungsvorgänge erzeugt werden, nicht die Konvektionsströmungen behindern und umgekehrt.

Wenn jedoch die Batterie aus konstruktiv vorgegebenen Platzverhältnissen nur quer zur erwähnten Vorzugsrichtung in das Fahrzeug eingebaut werden kann, muß die dynamische Durchmischung durch Beschleunigungskräfte trotzdem effektiv sein, so daß auch dann eine gute Durchmischung eintritt, wenn die Batterie nicht oder nicht ausschließlich in der Vorzugsrichtung beschleunigt wird, in der ein besonders ausgeprägtes Schwappen des Elektrolyts auftritt, d.h. bei Kurvenfahrten.

Die Aufgabe der Erfindung besteht in der Schaffung einer beheizbaren Flüssigelektrolytbatterie, bei welcher die Elektrolytdurchmischung durch beschleunigte Bewegungen der Batterie erfolgt, um die Elektrolytdurchmischung gegenüber dem Stand der Technik zu verbessern. Gleichzeitig besteht der Bedarf nach einer besonders einfachen und kostengünstigen Lösung.

Diese Aufgabe wird mit einer Flüssigelektrolytbatterie nach Anspruch 1 gelöst, die ein Gehäuse mit Seitenwänden, einem Boden und einer Abdeckung aufweist. In dem Gehäuse sind plattenförmige Elektroden senkrecht stehend angeordnet. Das Gehäuse ist mit Flüssigelektrolyt gefüllt, dessen Pegelstand über den Oberkante der Elektrodenplatten liegt.

An einer der beiden Seitenwände, auf welche die Stirnseiten der Elektrodenplatten gerichtet sind, ist eine Mehrkanal-Flüssigelektrolyt-Umwälzvorrichtung angeordnet, die nachfolgende Merkmale aufweist: Wenigstens eine erste Strömungskanalplatte ist parallel zu den senkrechten Kanten der Elektrodenplatten angeordnet. Zwischen dieser und der Seitenwand ist ein dynamischer Strömungskanal mit einem Querschnitt A_{DYN} zur Leitung einer dynamischen Strömung von unten nach oben ausbildet. Neben der ersten Strömungskanalplatte ist eine zweite Strömungskanalplatte ebenfalls parallel zu den senkrechten Kanten der Elektrodenplatten der ersten Strömungskanalplatte angeordnet und bildet zusammen mit der Seitenwand einen thermischen Strömungskanal mit einem Querschnitt A_{THERM} zur Leitung einer thermischen Strömung von unten nach oben. Der dynamische Strömungskanal ist von dem thermischen Strömungskanal getrennt. An der Außenfläche der Seitenwand ist im Bereich des unteren Endabschnitts des thermischen Strömungskanals eine elektrische Heizung vorgesehen. Weiterhin ist eine Ablaufplatte angeordnet, die sich oberhalb des Pegelstandes waagerecht zur Gehäusemitte hin erstreckt und an einer Seite mit der Oberkante der jeweiligen Strömungskanalplatte verbunden ist.

Wenn die Batterie nicht bewegt wird und die Heizung eingeschaltet ist, wirkt nur die thermische Durchmischung. Der thermische Strömungskanal ist so schmal ausgebildet, daß in Abhängigkeit von der verfügbaren Heizleistung der Heizung eine so starke Strömung entsteht, daß Elektrolyt aus dem Strömungskanal austritt und über die Ablaufplatte abläuft, d. h. dieser Kanal hat einen optimalen Querschnitt und erfüllt somit seine Funktion als thermischer Strömungskanal.

Wenn die Batterie bewegt wird, so wirkt die dynamische Durchmischung. Der dynamische Strömungskanal ist so breit ausgebildet, daß bei einer Beschleunigung der Batterie eine möglichst große Volumenmenge nach oben gedrückt wird und dann über die Ablaufplatte abläuft, d. h. der dieser Kanal hat einen optimalen Querschnitt und erfüllt somit seine Funktion als dynamischer Strömungskanal. Beide Kanäle sind somit bezüglich ihrer Funktion optimal einander angepaßt, wirken unabhängig voneinander und beeinflussen sich nicht gegenseitig.

Nach Anspruch 2 ist der ersten und der zweiten Strömungskanalplatte gegenüber vor der anderen Seitenwand eine weitere Strömungskanalplatte angeordnet, welche zusammen mit dieser Seitenwand einen dynamischen Strömungskanal für eine abwärts gerichtete Strömung bildet. Diese Strömungskanalplatte hat am oberen Endabschnitt eine trichterförmige Erweiterung, deren Oberkante oberhalb des Elektrolytpegels liegt. Durch diese Weiterbildung der Erfindung wird eine noch bessere Durchmischung des Elektrolyten bewirkt.

Nach Anspruch 3 liegt der thermische Strömungskanal symmetrisch zwischen zwei dynamischen Strömungskanälen. Das ermöglicht eine symmetrische Anordnung der Heizung, was wenigstens bezüglich der Montage der Heizung von Vorteil ist. Es ist auch wärmetechnisch günstiger, wenn die Wärme in der Mitte der Seitenwand eingeleitet wird.

Nach Anspruch 4 weist die Ablaufplatte Durchbrüche auf, so daß sich der ablaufende Elektrolyt gleichmäßig verteilt, wodurch die Durchmischung noch weiter verbessert wird.

Weitere Merkmale und Vorteile der Erfindung ergeben sich aus der nachfolgenden Beschreibung des Ausführungsbeispiels in Verbindung mit den beigefügten schematischen Zeichnungen.
- Fig. 1: zeigt die Draufsicht einer erfindungsgemäßen Batteriezelle.
- Fig. 2a: zeigt eine Schnittansicht der Batteriezelle einschließlich des thermischen Durchmischungskanals.
- Fig. 2b: zeigt eine Schnittansicht der Batteriezelle einschließlich des dynamischen Durchmischungskanals.
- Fig. 3: zeigt die an der Außenseite des Batteriegehäuses angeordnete Heizung.
- Fig. 4: zeigt einen leeren Batteriekasten nach dem Stand der Technik.

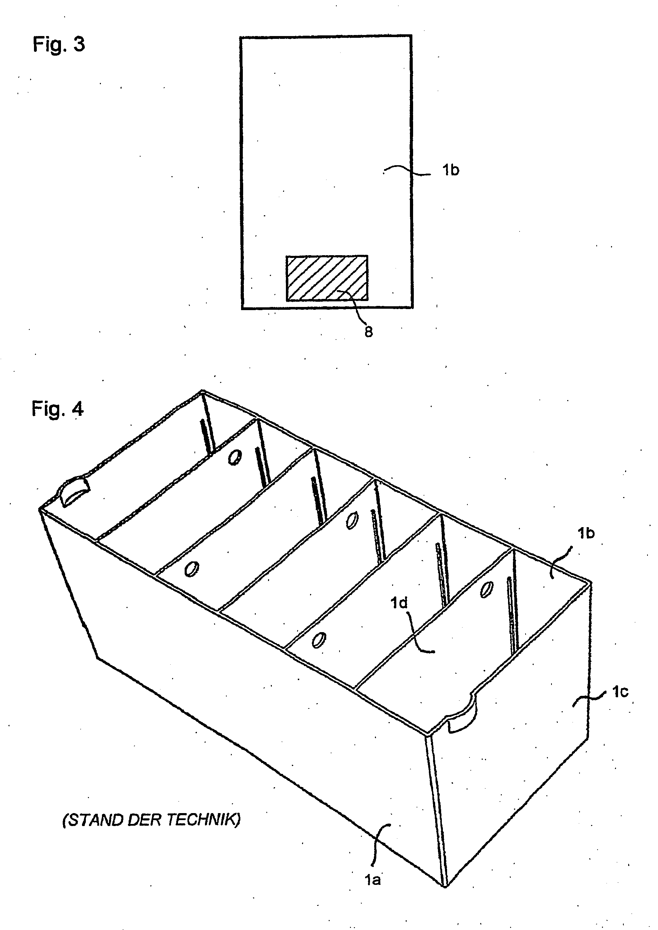

Die nachfolgende Erläuterung der Erfindung beginnt mit dem Stand der Technik nach Fig. 4, da dadurch die Erfindung leichter verständlich wird.

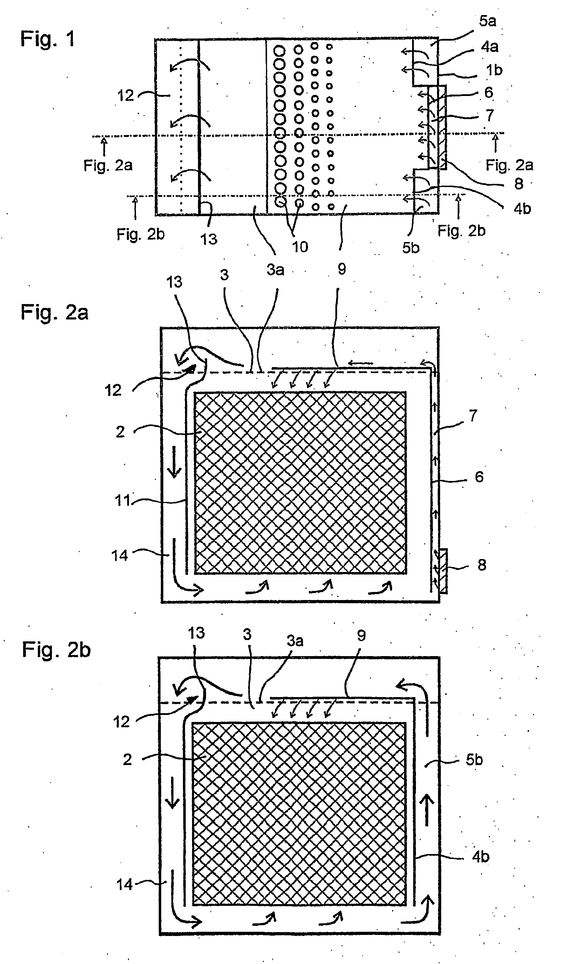

Die Fig. 4 zeigt einen Batteriekasten mit 6 Zellen. Alle nachfolgenden Erläuterungen beziehen sich jedoch nur auf eine einzige Zelle, wobei diese Zelle in Fig. 1 als Draufsicht und in Fig. 2a und 2b als Seitenansicht aus Richtung 1c (Figur 4) gesehen dargestellt ist. Da diese einzelne Zelle auch eine eigenständige Batterie ist, wird nachfolgend nur noch von einer Batterie gesprochen, da die Erfindung sowohl auf eine einzelne Zelle als auch auf die Kombination von mehreren Zellen anwendbar ist.

Die Fig. 1 zeigt eine Draufsicht der Batterie mit den Schnittlinien Fig. 2a - 2a und Fig. 2b - 2b, wobei die Fig. 2a die thermische Durchmischung und Fig. 2b die dynamische Durchmischung zeigt.

Nach Fig. 2a ist zwischen der senkrechten rechten Seitenwand 1 b und den rechten Seitenkanten der Elektrodenplatten 2 eine Strömungskanalplatte 6 angeordnet, so daß zwischen dieser Strömungskanalplatte 6 und der rechten Seitenwand 1b ein Strömungskanal 7 ausgebildet ist. Die Oberkante der Strömungskanalplatte 6 liegt im Bereich des Elektrolytpegelstandes 3a und ist mit einer Ablaufplatte 9 verbunden, die sich parallel zu den Oberkanten der Elektrodenplatten 2 zur Gehäusemitte hin erstreckt. Im Bereich des unteren Endabschnitts des Strömungskanals 7 ist außen an der Seitenwand 1b eine Widerstandsheizung angeordnet. Der Strömungskanal 7 weist einen Querschnitt A_{THERM} auf. Dieser Querschnitt ist in Abhängigkeit von der Heizleistung so bemessen, daß der erhitzte Elektrolyt schnell aufwärts strömt und über die Ablaufplatte 9 in das Elektrolytbad 3 zurück läuft.

Nach Fig. 2b sind links und rechts neben der Strömungskanalplatte 6 zwei weitere Strömungskanalplatten 4a und 4b angeordnet, die zusammen mit der Seitenwand 1 b zwei dynamische Strömungskanäle 5a und 5b mit je einem Querschnitt A_{DYN} bilden. Bei dieser Ausführungsform ist der Querschnitt A_{DYN} doppelt so groß wie der Querschnitt A_{THERM}.

Durch die Trennung der Strömungskanäle in einen Strömungskanal für die thermische Durchmischung und in einen Strömungskanal für die dynamische Durchmischung kann jeder Strömungskanal entsprechend seiner Funktion optimal dimensioniert werden, wobei der thermische Strömungskanal so dimensioniert wird, daß eine starke Aufwärtsströmung entsteht und der dynamische Strömungskanal so dimensioniert wird, daß bei einer Beschleunigung der Batterie möglichst viel Elektrolyt durch den Strömungskanal nach oben steigt und über die Ablaufplatte 9 in das Elektrolytbad 3 zurück zurückläuft. Vorzugsweise sind die dynamischen Strömungskanäle 5a, 5b gleich breit und links und rechts neben dem thermischen Strömungskanal 7 angeordnet. Um die dynamische Durchmischung noch weiter zu verbessern, ist zwischen der senkrechten linken Seitenwand 1a und den linken Seitenkanten der Elektrodenplatten 2 eine Strömungskanalplatte 11 angeordnet, so daß zwischen dieser Strömungskanalplatte 11 und der linken Seitenwand 1 a ein linker Strömungskanal 14 ausgebildet ist. Der obere Bereich dieses Strömungskanals ist als Trichter 12 ausgebildet. Unter Trichter ist eine Volumenerweiterung des oberen Endabschnitts des Strömungskanals 14 zu verstehen. Die Oberkante 13 dieses Trichters ragt einige Millimeter über den Elektrolytpegel 3a hinaus, so daß bei einer fahrzeugtypischen Bewegung Elektrolyt 3 in den Trichter 12 einschwappt. Da in diesem Zustand der Pegelstand in dem Strömungskanal höher ist als der Pegelstand 3a des Elektrolyten außerhalb dieses Strömungskanals, fließt die in den Trichter 12 gedrückte Elektrolytmenge unten aus dem Strömungskanal 14 heraus, so daß sich beide Pegelstände nach dem Prinzip der verbundenen Gefäße wieder angleichen. Es ist somit für den Fachmann klar, daß beide Durchmischungsfunktionen gleichzeitig auftreten können, ohne daß diese sich strömungstechnisch gegenseitig behindern. Durch die dynamische und/oder die thermische Durchmischung des Elektrolyten wird die schädliche Elektrolytstratifikation beseitigt. An Hand der beschriebenen Ausführungsformen kann der Fachmann die technische Lehre der vorliegenden Erfindung vollständig entnehmen. Es ist klar, daß diese Ausführungsformen durch einen Fachmann mit Hilfe der erfindungsgemäßen Lehre weiterentwickelt und modifiziert oder kombiniert werden können. Daher fallen auch diese, nicht explizit genannten oder gezeigten weiteren Ausführungsformen in den Schutzbereich der nachfolgenden Patentansprüche.

## Patentansprüche

1. Flüssigelektrolytbatterie mit Mehrkanal-Durchmischung, die aufweist:
- ein Gehäuse **(1)** mit Seitenwänden **(1a, 1b, 1c, 1d),** einem Boden und einer Abdeckung,
- Elektrodenplatten **(2),** die senkrecht stehend in dem Gehäuse **(1)** angeordnet sind,
- einen Flüssigelektrolyt **(3),** dessen Pegelstand **(3a)** in dem Gehäuse **(1)** bis über die Oberkante der Elektrodenplatten **(2)** reicht und
- eine Flüssigelektrolyt-Umwälzvorrichtung, die wenigstens nachfolgende Merkmale aufweist:
- eine erste Strömungskanalplatte **(4a, 4b),** die parallel zu den senkrechten Kanten der Elektrodenplatten **(2)** angeordnet ist und zusammen mit der Seitenwand **(1b)** einen dynamischen Strömungskanal **(5a, 5b)** mit einem Querschnitt A_{DYN} zur Leitung einer dynamischen Strömung von unten nach oben ausbildet,
- eine zweite Strömungskanalplatte **(6),** die parallel zu den senkrechten Kanten der Elektrodenplatten **(2)** neben der ersten Strömungskanalplatte **(4a, 4b)** angeordnet ist und zusammen mit der Seitenwand **(1b)** einen thermischen Strömungskanal **(7)** mit einem Querschnitt A_{THERM} zur Leitung einer thermischen Strömung von unten nach oben ausbildet, wobei
- außen an der Seitenwand **(1b)** im Bereich des unteren Endabschnitts des thermischen Strömungskanals **(7)** eine Heizung **(8)** angeordnet ist und
- eine Ablaufplatte **(9)** vorgesehen ist, die sich oberhalb des Pegelstandes **(3a)** waagerecht zur Gehäusemitte zu erstreckt und mit den Oberkanten der Strömungskanalplatten **(4a, 4b; 6)** verbunden ist.

2. Batterie nach Anspruch 1, **dadurch gekennzeichnet, daß** der ersten und der zweiten Strömungskanalplatte gegenüber vor der Seitenwand (1 a) eine Strömungskanalplatte **(11)** angeordnet ist, welche zusammen mit der Seitenwand (1a) einen Strömungskanal für eine abwärts gerichtete Strömung bildet, wobei die Strömungskanalplatte (11) am oberen Endabschnitt eine trichterförmige Erweiterung **(12)** aufweist, deren Oberkante **(13)** oberhalb des Pegels **(3a)** liegt.

3. Batterie nach Anspruch 2, **dadurch gekennzeichnet, daß** der thermische Strömungskanal **(7)** symmetrisch zwischen zwei dynamischen Strömungskanälen **(5a, 5b)** liegt.

4. Batterie nach Anspruch 1, **dadurch gekennzeichnet, daß** die Ablaufplatte **(9)** Durchbrüche **(10)** aufweist.

## Claims

1. Electrolytic battery with multi-channel intermixing, which comprises:
- a case **(1)** having side walls **(1a, 1b, 1c, 1d),** a bottom and a cover,
- electrode plates **(2)** vertically arranged in the case **(1),**
- a liquid electrolyte **(3),** the level **(3a)** of which being above the upper edge of each of the electrode plates **(2)** in the case **(1),** and
- a device for circulating the electrolyte, which comprises the following features:
- a first channel plate **(4a, 4b)** arranged in parallel with the vertical right edges of electrode plates **(2),** which, together with the side wall **(1b)** of battery, forms a dynamic flow channel **(5a, 5b)** having a cross section A_{DYN} for guiding a dynamic flow from bottom to top,
- a second channel plate **(6)** arranged close to the first channel plate **(4a, 4b)** in parallel with the vertical edges of electrode plates **(2),** which, together with the side wall **(1b)** of battery, forms a flow channel **(7)** having a cross section A_{THERM} for guiding a thermal flow from bottom to top, wherein
- a heater **(8)** is arranged at the outside surface of side wall **(1b)** in the area of the lower end portion of the thermal flow channel **(7)** and
- a drain plate **(9)** is provided, which is connected with the upper edges of the channel plates **(4a, 4b; 6)** and extends horizontally above the level of electrolyte **(3a)** towards the center of case.

2. Battery according to claim 1, **characterized in that** a channel plate **(11)** is arranged on the other side of battery opposite to the first and the second channel plates, which, together with the side wall **(1a)** of battery, forms a flow channel for a flow from top to bottom, wherein the upper part of channel plate **(11)** is slightly inclined to form a funnel **(12),** the upper edge **(13)** thereof being above the level of electrolyte **(3a)**

3. Battery according to claim 2, **characterized in that** the thermal flow channel **(7)** is symmetrically arranged between the two dynamic flow channels **(5a, 5b).**

4. Battery according to claim 1, **characterized in that** the drain plate **(9)** comprises openings (10).

## Revendications

1. Batterie à électrolyte liquide, à mélange par canaux multiples, qui comprend :
- un boîtier (1) muni de parois latérales (1a, 1b, 1c, 1d), d'un fond et d'un couvercle,
- des plaques d'électrodes (2), qui sont disposées à la verticale dans le boîtier (1),
- un électrolyte liquide (3), dont le niveau (3a) dans le boîtier (1) dépasse le bord supérieur des plaques d'électrodes (2) et
- un système de recirculation de l'électrolyte liquide, qui comprend au moins les caractéristiques suivantes :
- une première plaque de canal de circulation (4a, 4b), qui est disposée parallèlement aux arêtes verticales des plaques d'électrodes (2) et forme, conjointement avec la paroi latérale (1b), un canal de circulation dynamique (5a, 5b) ayant une section transversale A_{DYN} pour conduire un courant dynamique du bas vers le haut,
- une deuxième plaque de canal de circulation (6), qui est disposée parallèlement aux arêtes verticales des plaques d'électrodes (2) à côté de la première plaque de canal de circulation (4a, 4b) et forme, conjointement avec la paroi latérale (1b), un canal de circulation thermique (7) ayant une section transversale A_{THERM} pour conduire un courant thermique du bas vers le haut, où
- un élément chauffant (8) est disposé à l'extérieur contre la paroi latérale (1b), dans la zone de la portion terminale inférieure du canal de circulation thermique (7), et
- une plaque d'écoulement (9), qui s'étend au-dessus du niveau (3a) à l'horizontale par rapport au milieu du boîtier et est raccordée aux bords supérieurs des plaques de canaux de circulation (4a, 4b ; 6), est prévue.

2. Batterie selon la revendication 1, **caractérisée en ce qu'**une plaque de canal de circulation (11), qui forme, conjointement avec la paroi latérale (1a), un canal de circulation pour un courant dirigé vers le bas, est disposée en face des première et deuxième plaques de canaux de circulation devant la paroi latérale (1a), la plaque de canal de circulation (11) présentant sur la portion terminale supérieure un élargissement en forme d'entonnoir (12), dont le bord supérieur (13) se situe au-delà du niveau (3a).

3. Batterie selon la revendication 2, **caractérisée en ce que** le canal de circulation thermique (7) est placé symétriquement entre les deux canaux de circulation dynamique (5a, 5b).

4. Batterie selon la revendication 1, **caractérisée en ce que** la plaque d'écoulement (9) présente des orifices (10).
